**Europäisches Patentamt**

**European Patent Office**

**Office européen des brevets**

(11) Veröffentlichungsnummer: **0 560 161 B1**

# EUROPÄISCHE PATENTSCHRIFT

(45) Veröffentlichungstag der Patentschrift: **12.07.95**

(21) Anmeldenummer: **93103216.3**

(22) Anmeldetag: **01.03.93**

(51) Int. Cl.⁶: **D06M 15/576**, D06M 15/53, D06M 15/277, C08G 18/62, C08G 18/10, D06M 15/568

(54) **Mittel und Verfahren zur Ausrüstung von Textilien.**

(30) Priorität: **12.03.92 DE 4207851**

(43) Veröffentlichungstag der Anmeldung:
**15.09.93 Patentblatt 93/37**

(45) Bekanntmachung des Hinweises auf die Patenterteilung:
**12.07.95 Patentblatt 95/28**

(84) Benannte Vertragsstaaten:
**BE CH DE FR GB IT LI NL**

(56) Entgegenhaltungen:
EP-A- 0 156 155          EP-A- 0 273 449
EP-A- 0 283 892          EP-A- 0 340 797
EP-A- 0 435 220          WO-A-93/01349
US-A- 3 639 157          US-A- 3 759 874

(73) Patentinhaber: **BAYER AG**

**D-51368 Leverkusen (DE)**

(72) Erfinder: **Gisbert, Michels, Dr.**
**Morgengraben 3**
**W-5000 Köln 80 (DE)**
Erfinder: **Ehlert, Hans-Albert, Dipl.-Ing.**
**Körnerstrasse 3**
**W-5090 Leverkusen 1 (DE)**
Erfinder: **Laas, Hans-Josef, Dr.**
**Merheimer Strasse 249**
**W-5000 Köln 60 (DE)**
Erfinder: **Probst, Joachim, Dr.**
**Humperdinckstrasse 42**
**W-5090 Leverkusen 1 (DE)**
Erfinder: **Reiff, Helmut, Dr.**
**Paul-Klee-Strasse 68i**
**W-5090 Leverkusen 1 (DE)**
Erfinder: **Meyer, Rolf-Volker, Dr.**
**Breiten Dyk 35**
**W-4150 Krefeld 1 (DE)**

**Beschreibung**

Die vorliegende Erfindung betrifft Mittel und ein Verfahren zur Erzielung verbesserter wasch- und reinigungsbeständiger Textilausrüstungen durch Imprägnieren mit wäßrigen Dispersionen üblicher reaktiver Perfluoralkylreste enthaltender Copolymerer bzw. Kondensaten, unter gleichzeitiger Verwendung von wasserdispergierbaren Polyisocyanatgemischen, deren NCO-Gruppen nicht blockiert sind.

Die öl- und wasserabweisende Ausrüstung mit den unterschiedlichsten reaktiven Polymeren bzw. Kondensaten, die Perfluoralkylgruppen enthalten, ist bekannt (EP-A-073 364; US-A 3 356 628). Diese Ausrüstungen können mit bekannten Ausrüstungsmitteln kombiniert werden, wobei vor allem methylolierte Verbindungen, aber auch Diisocyanate zu nennen sind. Nachteilig ist dabei, daß die Ausrüstung mit den Diisocyanaten aus Lösungsmitteln erfolgen muß (wäßrige Emulsionen sind unbeständig) und die erzielte Verbesserung der Reinigungsbeständigkeit ungenügend bleibt.

Weiterhin ist aus der EP-A-0 196 309 als Weiterentwicklung bekannt, daß öl- und wasserabweisende Ausrüstungen mit reaktiven Polymeren bzw. Kondensaten, die Perfluoralkylgruppen enthalten, in wäßriger Dispersion mit Isocyanatgruppen enthaltenden Verbindungen erhalten werden, wobei die Isocyanatgruppen enthaltenden Verbindung sämtlich in blockierter Form vorliegen müssen.

Nachteilig ist dabei, daß die in der wäßrigen Dispersion enthaltenden Isocyanatgruppen enthaltenden Verbindungen in blockierter Form vorliegen, so daß zur Freisetzung der Isocyanate eine Temperaturbehandlung von 150°C für die Dauer von 2,5 bis 5 min erforderlich ist. Die Freisetzung des Blockierungs- bzw. Verkappungsmittels, das in die Abluft gelangen kann, ist ebenfalls nachteilig aus Gründen der Toxologie und Arbeitshygiene.

Es war daher wünschenswert, wasch- und reinigungsbeständige Textilausrüstungen mit reaktiven, Perfluoralkylreste enthaltenden Copolymeren bzw. Cokondensaten bereitzustellen, die aus wäßriger Dispersion appliziert werden können, bei niedrigen Temperaturen vernetzt werden können und die eine bessere Umweltverträglichkeit aufweisen.

Es wurde nun erfindungsgemäß gefunden, daß wasch- und reinigungsbeständige Textilausrüstungen mit reaktiven, Perfluoralkylreste enthaltenden Copolymeren bzw. Cokondensaten aus wäßriger Dispersion erhalten werden, wenn wasserdispergierbare, nicht blockierte Polyisocyanatgemische als Vernetzungsmittel zum Einsatz kommen, die im Gegensatz zu Isocyanatgruppen enthaltenden Verbindungen in blockierter Form bei milden Reaktionsbedingungen und ohne die schädliche Freisetzung eines Verkappungsmittels einsetzbar sind.

Die reaktiven Perfluoralkylgruppen enthaltenden Copolymerisate und Copolykondensate, die als reaktive Gruppen OH- bzw. OR-Gruppen enthalten, in denen R einen Alkylrest mit 1 bis 3 C-Atomen bedeutet, sind dem Fachmann hinreichend bekannt (siehe z.B. DE-B-1 419 505).

Im allgemeinen handelt es sich um Copolymerisate auf Basis von Vinylestern, insbesondere Vinylacetat und Acrylsäureestern, insbesondere Butylacrylat. Als Comonomere kommen dabei die unterschiedlichsten Verbindungen, wie andere Acrylate, z.B. Ethyl-, Methyl- oder 2-Ethylhexylacrylat, Ethylen, Styrol, Acrylamid und Acrylnitril in Betracht, die auch geringe Mengen an carboxylgruppenhaltigen Monomeren, z.B. Itaconsäure und (Meth)Acrylsäure, oder Monomere mit mehreren Doppelbindungen, z.B. Butandioldiacrylat, einpolymerisiert enthalten können. Diese Copolymeren enthalten übliche Monomere mit Perfluoralkylgruppen einpolymerisiert, wobei diese Monomeren durchaus auch die Hauptkomponente sein können. Als reaktive Gruppen enthalten die verwendeten Perfluoralkylgruppen enthaltenden Copolymeren N-Methylol- bzw. N-Methylol-($C_1$- bis $C_3$-Alkyl)ether-gruppen, die durch Verwendung von methylolierten und gegebenenfalls veretherten (Meth)acrylamiden oder Allylcarbamaten in das Copolymere eingebaut werden. Daneben sind aber auch OH-gruppenhaltige Comonomere, z.B. Hydroxyalkyl(meth)acrylate, wie 2-Hydroxyethyl- oder 2-Hydroxypropyl-acrylat, sehr gut geeignet. Die Monomeren mit den reaktiven Gruppen sind im allgemeinen in Mengen von 2 bis 20, insbesondere 3 bis 15 Gew.-%, bezogen auf das gesamte Polymerisat, einpolymerisiert. Diese Copolymerisate werden in bekannter Weise, vorzugsweise durch Emulsionscopolymerisation in wäßrigem Medium hergestellt.

Als reaktive Verbindungen werden anstelle oder auch zusammen mit den Copolymeren reaktive, Perfluoralkylgruppen enthaltende Kondensate verwendet. Vor allem handelt es sich dabei um die üblichen gegebenenfalls mit $C_1$- bis $C_3$-Alkoholen veretherten Methylolmelamine bzw. Methylolharnstoffe, die in mit Perfluoralkylgruppen modifizierter Form vorliegen. Ein typischer Vertreter dieser Gruppe von Verbindungen wird in der EP-OS 073 364 beschrieben.

Weitere, ebenfalls geeignete reaktive Verbindungen für die erfindungsgemäßen Mittel sind dem Fachmann ebenfalls bekannt. Als Beispiele seien freie OH-Gruppen und Perfluoralkylgruppen enthaltende Polyurethane genannt. Der Begriff reaktive, Perfluoralkylgruppen enthaltende Copolymere umfaßt demnach ein weites Feld.

Bei den in den erfindungsgemäßen Mitteln als Vernetzerkomponente einzusetzenden wasserdispergierbaren Polyisocyanaten handelt es sich um Polyisocyanatgemische mit

a) einer mittleren NCO-Funktionalität von 1,8 bis 4,2,

b) einem Gehalt an (cyclo)aliphatisch gebundenen Isocyanatgruppen (berechnet als NCO, Molekulargewicht = 42) von 12,0 bis 21,5 Gew.-% und

c) einem Gehalt an innerhalb von Polyetherketten angeordneten Ethylenoxideinheiten (berechnet als $C_2H_4O$, Molekulargewicht = 44) von 2 bis 20 Gew.-%, wobei die Polyetherketten im statistischen Mittel von 5 bis 70 Ethylenoxideinheiten aufweisen.

Die Herstellung dieser Polyisocyanatgemische erfolgt in an sich bekannter Weise durch Umsetzung einer Polyisocyanatkomponente A) mit einer (mittleren) NCO-Funktionalität von 2,1 bis 4,4, vorzugsweise 2,3 bis 4,3, bestehend aus mindestens einem Polyisocyanat mit ausschließlich (cyclo)aliphatisch gebundenen Isocyanatgruppen mit einem ein- oder mehrwertigen, im statistischen Mittel von 5 bis 70 Ethylenoxideinheiten aufweisenden Polyalkylenoxidpolyetheralkohol B) unter Einhaltung eines NCO/OH-Äquivalentverhältnisses von mindestens 2:1, im allgemeinen von 4:1 bis ca. 1 000:1. Hierbei werden Art und Mengenverhältnisse der genannten Ausgangskomponenten in einer dem Fachmann bekannten Weise so gewählt, daß die resultierenden Umsetzungsprodukte den oben unter a) bis c) genannten Bedingungen entsprechen.

Bei der Polyisocyanatkomponente A) zur Herstellung der wasserdispergierbaren Polyisocyanate bzw. Polyisocyanatgemische handelt es sich um beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-A-1 670 666, 3 700 209 und 3 900 053 oder den EP-A-336 205 und 339 396 beispielhaft beschrieben sind.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexlymethan oder beliebige Gemische solcher Diisocyanate.

Bevorzugt handelt es sich bei den zur Herstellung der wasseremulgierbaren Polyisocyanate eingesetzten Ausgangskomponenten A) um im wesentlichen aus trimerem 1,6-Diisocyanatohexan und gegebenenfalls dimerem 1,6-Diisocyanatohexan bestehende Isocyanuratgruppen und gegebenenfalls Uretdiongruppen aufweisende Polyisocyanatgemische mit einem NCO-Gehalt von 19 bis 24 Gew.-%. Besonders bevorzugt werden als Komponente A) die entsprechenden, weitgehend Uretdiongruppenfreien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Bei den Polyetheralkoholen B) handelt es sich um ein- oder mehrwertige, im statistischen Mittel 5 bis 70, vorzugsweise 6 bis 60 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Zur Herstellung der Polyetheralkohole B) können beliebige ein- oder mehrwertige Alkohole des Molekulargewichtsbereichs 32 bis 150, wie sie beispielsweise auch gemäß EP-A-206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder um gemischte Polyalkylenoxidpolyether, die mindestens eine Polyetherkette mit mindestens 5, im allgemeinen 5 bis 70, vorzugsweise 6 bis 60 und besonders bevorzugt 7 bis 20 Ethylenoxideinheiten in der Polyetherkette aufweisen und deren Alkylenoxideinheiten zumindest 60 Mol-%, vorzugsweise zumindest 70 Mol-% aus Ethylenoxideinheiten bestehen.

Geeignete wasserdispergierbare Polyisocyanate sind beispielsweise solche, wie sie in der EP-A-206 059 oder der DE-A-41 36 618 beschrieben sind.

Weiterhin sind für die erfindungsgemäßen Mittel auch Polyisocyanatgemische mit aromatisch gebundenen Isocyanatgruppen einsetzbar (siehe EP-A-61 628, GB-A-1 444 933). Dies ist jedoch weniger bevorzugt.

Die wasserdispergierbaren Polyisocyanatgemische werden zur Erzielung der wasch- und reinigungsbeständigen Textilausrüstungen als Vernetzungsmittel eingesetzt. Sie verbessern weiterhin als sogenannte Extender die Öl- und Wasserabweisung und ermöglichen dabei eine Verringerung der Menge der Perfluoralkylreste enthaltenden Verbindungen. Dafür sind Mengen von 3 bis 500 Gew.-%, bezogen auf 100%-iges reaktives, Perfluoralkylgruppen enthaltendes Copolymer bzw. Kondensat, notwendig.

Bei dem erfindungsgemäßen Verfahren zum Behandeln von Textilien werden die beschriebenen wasserdispergierbaren Polyisocyanatmischungen in Substanz den wäßrigen Dispersionen der Perfluoralkylgruppen enthaltenden Verbindungen zugesetzt. Selbstverständlich kann man diesen Polyisocyanatmischungen vor ihrem Zusatz organische Lösungsmittel zumischen, um die Viskosität zu reduzieren. Solche Lösungsmittel können beispielsweise Ethylacetat, Aceton oder Methylethylketon sein; in bevorzugter Weise werden jedoch aus Sicherheitsgründen hochsiedende Lösungsmittel, wie Propylenglykoldiacetat, Diethylenglykoldimethylether, Butyldiglykolacetat oder Methoxypropylacetat, eingesetzt. Wenn immer es möglich ist, wird in bevorzugter Weise auf das Zumischen organischer Lösungsmittel verzichtet.

Ferner ist es möglich, die Polyisocyanatmischungen in Form wäßriger Dispersionen mit einem Feststoffgehalt von ca. 10 bis 65 Gew.-% bereitzustellen. Die Herstellung dieser Dispersionen bzw. Emulsionen erfolgt kurz vor der erfindungsgemäßen Verwendung durch einfaches Vermischen der spontan in Wasser dispergierbaren Polyisocyanatmischungen mit Wasser.

Die wasserdispergierbaren Polyisocyanatgemische gestatten die Herstellung stabiler, wäßriger Emulsionen, in denen eine Reaktion der Isocyanatgruppen mit Wasser nur langsam abläuft. Es kann gezeigt werden, daß der NCO-Gehalt während der ersten 5 Std. nach erfolgter Emulgierung nur um weniger als 10 Rel.-% abnimmt (Beispiel I). Die Emulsionen weisen selbst nach einer Standzeit von mehr als 24 Std. keinerlei Ausfällungen oder Bodensatz auf.

Die Reihenfolge der Zugabe bei der Herstellung der erfindungsgemäßen Mittel (Ausrüstungsflotte) ist beliebig. Es ist dabei möglich, sowohl eine wäßrige Dispersion der Perfluoralkylgruppen enthaltenden Verbindungen vorzulegen und die wasserdispergierbaren Polyisocyanatgemische - in Substanz oder durch Lösungsmittel oder Wasser verdünnt - zuzusetzen, als auch in umgekehrter Reihenfolge vorzugehen. Auch eine gleichzeitige Zugabe beider Einsatzstoffe ist möglich.

Die Herstellung erfolgt dabei in jedem Fall durch einfaches Vermischen der Ausrüstungsflotte, die stabil ist und keinerlei Ausfällungen oder Bodensatz zeigt.

Neben den verschiedenen reaktiven Perfluoralkylgruppen enthaltenden Copolymeren bzw. Kondensaten können im Rahmen des erfindungsgemäßen Verfahrens auch andere übliche Textilhilfsmittel, deren Zusatz schon bei der Herstellung der Ausrüstungsflotte, aber selbstverständlich auch erst nachträglich erfolgen kann, mitverwendet werden.

Als solche Zusätze sind übliche Knitterfrei- und Weichgriffmittel, Flammfestmittel, Oleophobierungsmittel, Hydrophobiermittel, Appreturmittel und andere zu nennen. Selbstverständlich ist es auch angebracht, soweit erforderlich, bekannte Härtungsmittel mitzuverwenden.

Das erfindungsgemäße Verfahren dient zum Imprägnieren von Textilien aller Art aus wäßrigem Medium. Das Wasser kommt dabei natürlich in unterschiedlichen Mengen zum Einsatz, je nachdem, ob durch Foulardieren, Sprühen, Pflatschen oder ähnliches eine Imprägnierung, also Durchtränkung des Materials, vorgenommen wird. Bei der Imprägnierung handelt es sich um durchaus gängige Ausrüstungsmethoden, die dem Fachmann geläufig sind. Diese Verfahren bedürfen daher keiner besonderen Erläuterung und es kann auf die bekannte Literatur verwiesen werden.

Zur Erzielung wasch- und reinigungsbeständiger Textilausrüstungen nach dem erfindungsgemäßen Verfahren können milde Reaktionsbedingungen für die Vernetzung gewählt werden. Die Trocknung und Vernetzung der aus wäßrigen Medien imprägnierten Textilien kann ab Temperaturen von 20°C oder höher erfolgen. Es ist selbstverständlich aber auch möglich, Temperaturen von 150°C oder höher, beispielsweise bis 200°C, bei der Trocknung und Vernetzung einzuhalten.

Die erfindungsgemäßen Mittel sind zum Imprägnieren von Textilien aller Art, sei es in Form von Geweben, Gewirken oder Vliesen geeignet. Diese können sowohl aus natürlichen Fasern, wie Cellulose- oder Keratinfasern, als auch aus synthetischen Fasern, wie Polyacrylnitril, Polyamid, Polyvinylalkohol oder Polyester, hergestellt sein. Selbstverständlich kommen auch Textilmaterialien in Betracht, die aus Mischungen von natürlichen mit synthetischen Fasern bestehen. Hervorzuheben ist, daß nach dem erfindungsgemäßen Verfahren auch leicht eingestellte Gewebe, wie Taft oder leicht eingestellte Popelinestoffe, ausgerüstet werden können. Dies ist beispielsweise für Regenschutzbekleidung, wie Anoraks und dergleichen von Bedeutung. Bevorzugt sind Regenkleidung, Tischwäsche, Arbeitsschutzkleidung und technische Textilien.

Erst durch die erfindungsgemäßen Mittel ist es möglich geworden, Textilien derart wasser- und ölabweisend auszurüsten, daß diese Ausrüstungen sehr gut wasch- und/oder (chemisch)-reinigungsbeständig sind, ohne die oben genannten Nachteile aufzuweisen.

Beispiele

Beispiel I

1,0 Val eines Isocyanuratgruppen-haltigen Polyisocyanates auf Basis von 1,6-Diisocyanatohexan (HDI) mit einem NCO-Gehalt von 21,5%, einer mittleren NCO-Funktionalität von ca. 3,8 und einer Viskosität von 3 000 mPas (23°C) wurden bei Raumtemperatur unter Rühren mit 0,08 Val eines auf Methanol gestarteten, monofunktionellen Polyethylenoxidpolyethers mit einem mittleren Molekulargewicht von 350 versetzt und anschießend für 3 Stunden auf 100°C erwärmt. Nach Abkühlen auf Raumtemperatur lag ein erfindungsgemäß einsetzbares, praktisch farbloses klares Polyisocyanatgemisch vor. Der NCO-Gehalt betrug 17,3%, der Gehalt an Ethylenoxideinheiten beträgt 11,3% und die Viskosität 3 050 mPas (23°C).

75 g dieses Polyisocyanatgemisches wurden in einem Erlenmeyerkolben mit 175 g entionisiertem Wasser versetzt und durch leichtes Rühren in eine feinteilige, blaustichige Emulsion übergeführt.

Wie die nachfolgende Tabelle zeigt nahm der NCO-Gehalt in der Emulsion während der ersten 5 Stunden bei 23°C um weniger als 10 Rel.-% ab.

| Standzeit der Emulsion [min] bei 23°C | NCO-Gehalt [%] |
|---|---|
| 5 | 5,2 |
| 60 | 5,0 |
| 120 | 4,9 |
| 180 | 4,9 |
| 240 | 4,7 |
| 300 | 4,7 |

Nach einer Standzeit von 24 Stunden (23°C) war die Emulsion noch stabil. Sie zeigte keinerlei Ausfällungen oder Bodensatz.

Beispiel II

1,0 Val des in Beispiel I eingesetzten Isocyanuratgruppen-haltigen Polyisocyanates wurde bei Raumtemperatur mit 0,015 Val eines auf n-Butanol gestarteten, monofunktionellen Polyethylenoxid-polypropylenoxidpolyethers mit einem Gehalt an Ethylenoxideinheiten von 80% und einem mittleren Molekulargewicht von 2 150 versetzt und anschießend für 1 Stunde auf 100°C erwärmt. Nach Abkühlen auf Raumtemperatur erhielt man ein schwach gelbes, klares Polyisocyanatgemisch mit einem NCO-Gehalt von 18,2%, einem Gehalt an Ethylenoxideinheiten von 11,3% und einer Viskosität von 3 360 mPas (23°C).

Beispiel III

Zu 500 g eines durch Trimerisierung eines Teils der Isocyanatgruppen von 1,6-Diisocyanatohexan hergestellten, Isocyanuratgruppen aufweisenden Polyisocyanats, welches im wesentlichen aus Tris-(6-isocyanatohexyl)-isocyanurat und dessen höheren Homologen besteht, mit einem NCO-Gehalt von 21,6%, einem Gehalt an monomerem Diisocyanat von 0,3%, einer Viskosität bei 23°C von 1 700 mPa.s und einer mittleren NCO-Funktionalität von ca. 3,3 gab man unter Rühren 40 g eines auf 3-Ethyl-3-hydroxymethyl-oxetan gestarteten monofunktionellen Polyethylenoxidethers vom Molekulargewicht 1 210 und rührte 2 Std. bei 100°C. Man erhielt eine klare, gelbe wasserdispergierbare Polyisocyanuratzubereitung vom NCO-Gehalt 19,0% und einer Viskosität von 2 600 mPas (23°C).

Herstellung der erfindungsgemäßen Mittel

Beispiel 1

Es wird ein erfindungsgemäßes Mittel (Flotte oder Ausrüstungsflotte) durch einfaches Verrühren folgender Stoffe in Wasser hergestellt:
1 g/l 60 %ige Essigsäure,
40 g/l einer 45 %igen wäßrigen Lösung von Dimethylol-4,5-dihydroxyethylenharnstoff,
3 g/l Zinknitrat,

30 g/l einer 16 %igen wäßrigen Dispersion eines Perfluoralkylgruppen enthaltenden Copolymeren mit 40 Gew.-% Fluor im Feststoff (Baygard CA 40 135 der Bayer AG) und
4 g/l des nach Beispiel I hergestellten Polyisocyanatgemisches.

Essigsäure, Dimethylol-4,5-dihydroxyethylenharnstoff und Zinknitrat sind dem Fachmann geläufige Bestandteile solcher Ausrüstungsflotten.

Die Ausrüstungsflotte ist für die Dauer der Textilausrüstung stabil. Nach 24 h ist weder ein Bodensatz noch sonst eine Änderung der Ausrüstungsflotte zu beobachten. Die Wirksamkeit ist nach 24 h identisch mit der frisch hergestellten Ausrüstungsflotte.

Weitere erfindungsgemäße Mittel sind bei den Verwendungsbeispielen 2 bis 5 aufgeführt und als Flotte bezeichnet.

Verwendungsbeispiele

In den folgenden Beispielen erfolgt die Prüfung der Oleophobie nach dem Ölabweisungstest nach AATCC Test Method 118-1978; es wird die Öltestnote angegeben. Die Prüfung der Wasserabweisung erfolgt nach DIN 53 888 (Prüfung der wasserabweisenden Eigenschaften von textilen Flächengebilden im Beregnungsversuch nach Bundesmann), wobei die Abperlzeit in Minuten, der Abperleffekt in Noten (5-1) und die Wasseraufnahme in Gew.-% angegeben wird.

Beispiel 2

Ein Baumwollgewebe (130 g/m$^2$) wird mit folgender Flotte foulardiert:
1 g/l 60 %ige Essigsäure,
40 g/l einer 45 %igen wäßrigen Lösung von Dimethylol-4,5-dihydroxyethylenharnstoff,
3 g/l Zinknitrat,
30 g/l einer 16 %igen wäßrigen Dispersion eines Perfluoralkylgruppen enthaltenden Copolymeren mit 40 Gew.-% Fluor im Feststoff (Baygard CA 40 135 der Bayer AG) und
8 g/l des nach Beispiel I hergestellten Polyisocyanatgemischs.

Die Flottenaufnahme beträgt 70 %. Das so behandelte Gewebe wird anschließend bei 100°C 10 min getrocknet und gleichzeitig vernetzt. Zum Vergleich (Vergleich A) wird eine Ausrüstung in gleicher Weise ohne das nach Beispiel I hergestellte Polyisocyanatgemisch durchgeführt, wobei nach der Trocknung für 5 min bei 150°C kondensiert wird.

Die Ergebnisse sind der Tabelle zu entnehmen.

Beispiel 3

Ein Polyester/Baumwollgewebe (67/33; 157 g/m$^2$) wird mit folgender Flotte foulardiert:
1 g/l 60 %ige Essigsäure,
40 g/l einer 45 %igen wäßrigen Lösung von Dimethylol-4,5-dihydroxyethylenharnstoff,
3 g/l Zinknitrat,
30 g/l einer 16 %igen wäßrigen Dispersion eines Perfluoralkylgruppen enthaltenden Copolymeren mit 40 Gew.-% Fluor im Feststoff (Baygard CA 40 135 der Bayer AG) und
2 g/l des nach Beispiel I hergestellten Polyisocyanatgemischs.

Die Flottenaufnahme beträgt 56 %. Das so behandelte Gewebe wird anschließend bei 100°C 10 min getrocknet und gleichzeitig vernetzt. Zum Vergleich wird eine Ausrüstung (Vergleich B) in gleicher Weise mit zusätzlicher Kondensation bei 150°C innerhalb 5 min durchgeführt. Als weiterer Vergleich dient eine Ausrüstung (Vergleich C), die wie Beispiel 3, jedoch ohne das nach Beispiel I hergestellte Polyisocyanatgemisch durchgeführt wurde.

Die Ergebnisse sind der Tabelle zu entnehmen.

Beispiel 4

Ein Polyestergewebe (85 g/m$^2$) wird mit folgender Flotte foulardiert:
1 g/l 60 %ige Essigsäure,
25 g/l einer 16 %igen wäßrigen Dispersion eines Perfluoralkylgruppen enthaltenden Copolymeren mit 40 Gew.-% Fluor im Feststoff (Baygard CA 40 135 der Bayer AG) und
3 g/l einer 80 %igen Verdünnung eines nach Beispiel I hergestellten Polyisocyanatgemischs in Propylenglykoldiacetat.

Die Flottenaufnahme beträgt 55 %. Das so behandelte Gewebe wird anschließend bei 100 °C 10 min getrocknet und gleichzeitig vernetzt.

Beispiel 5

Ein Polyamidgewebe (57 g/m$^2$) wird mit folgender Flotte foulardiert:
1 g/l 60 %ige Essigsäure,
25 g/l einer 10 %igen wäßrigen Dispersion eines Perfluoralkylgruppen enthaltenden Copolymeren mit 40 Gew.-% Fluor im Feststoff (Baygard CA 40 135 der Bayer AG) und
1 g/l eines nach Beispiel I hergestellten Polyisocyanatgemisches.

Die Flottenaufnahme beträgt 45 %. Das so erhaltene Gewebe wird anschließend bei 100 °C 10 min getrocknet und gleichzeitig vernetzt. Die Ergebnisse aus Beispiel 4 und 5 sind in der Tabelle aufgeführt.

T a b e l l e : Ergebnisse der Textilausrüstungen

| Ausrüstung | Original Wasserabweisung | | | Ölabweisung | nach 3x40°C-Maschinenwäschen Wasserabweisung | | | Ölabweisung |
|---|---|---|---|---|---|---|---|---|
| | Abperl-zeit | -Note | Wasserauf-nahme | | Abperl-zeit | -Note | Wasserauf-nahme | |
| Beispiel 2 | 10 | 5 | 7,8 | 5 | 10 | 5 | 6,4 | 5 |
| Vergleich A | 10 | 5 | 7,8 | 4 | 0 | 1 | 33,2 | 3 |
| Beispiel 3 | 10 | 5 | 1,2 | 5 | 10 | 5 | 1,6 | 5 |
| Vergleich B | 10 | 5 | 0,8 | 6 | 10 | 5 | 1,6 | 5 |
| Vergleich C | 10 | 5 | 3,3 | 4 | 0 | 1 | 22,9 | 3 |
| Beispiel 4 | 10 | 5 | 1,5 | 6 | 10 | 5 | 1,4 | 6 |
| Beispiel 5 | 10 | 5 | 5,7 | 4 | 10 | 5 | 6,7 | 4 |

Beispiel 6

Ein PES/CO-Körper 60/40 mit einem Gewicht von ca. 240 g/m$^2$, gebleicht und weißgetönt, wird mit folgenden Imprägnierflotten imprägniert, im Foulard auf eine Flottenaufnahme von 60 % abgequetscht und anschließend bei 110°C getrocknet und danach bei 150°C während 5 min kondensiert.

Die für die leichtere Schmutzauswaschbarkeit (Soil Release) geeignete Ausrüstung wird wie folgt geprüft:

Der Prüfling von 20x20 cm wird mit 5 ml einer Lanolin/Ruß-Mischung befleckt und unter einer Glasplatte mit 2,5 kg während 1 min belastet Nach einer Stunde wird der nicht aufgesaugte Teil mit einem Papiertuch entfernt. Nach einer Einwirkzeit von 24 Std. wird der Prüfling bei 60°C mit einem perborathaltigen Haushaltswaschmittel gewaschen. Der verbliebene Fleck wird visuell in Anlehnung an die Bewertung mit dem Graumaßstab DIN 54 002 für das Anbluten bewertet. (Note 1-5, 1 = Maximum, 5 = Minimum). Die Prüfung wird am Original und nach fünf Waschzyklen durchgeführt.

Lanolin/Ruß-Mischung besteht aus 50 g Lanolin DAB 6, 10 g Farbruß FW 1 (Degussa), 0,2 g Ceresrot 4 B, 500 ml Ethanol und 500 ml Perchlorethylen.

Die Wiederanschmutzung (Soil redeposition) prüft man wie folgt:

0,5 g Ruß CK 3 (Degussa) werden mit 2,0 g Waschmittel Dixan (Henkel) vermischt und mit heißem Wasser angeschlemmt. Diese Mischung bleibt 4-5 Stunden stehen. Anschließend wird mit Wasser auf 1 l aufgefüllt, mit einem Schnellrührer 5 min gerührt und auf 60°C erhitzt. Der Prüfling wird in das Schmutzbad eingelegt und 15 min bei konstanter Temperatur darin bewegt (Flottenverhältnis 1:50). Danach wird 5 min unter fließendem, kaltem Wasser gespült und danach getrocknet.

Die Beurteilung der Wiederanschmutzung erfolgt durch eine Weißgradmessung bewertet nach Berger (siehe: E. Ganz, Whiteness Formulas: A Selection, Applied Optics 18 (1979), 1073-1078).

Aufgebracht wurde folgende Flotte:

60 g/l einer Dispersion eines Perfluoralkylketten enthaltenden Acrylat-Copolymeren mit einem Fluorgehalt von ca. 40 Gew.-% im Feststoff und ca. 30 Gew.-% Feststoff, bezogen auf die Gesamtdispersion; das Copolymer enthält Polyethylenoxidmethacrylat mit reaktionsfähigen OH-Gruppen, wie es in EP-A-312 964 beschrieben ist,

5 g/l des nach Beispiel I hergestellten Polyisocyanatgemisches.

Als Vergleichsbeispiel wurde folgende Imprägnierflotte aufgebracht (Vergleich D):

60 g/l einer 45 %igen wäßrigen Lösung von Dimethylolethylenharnstoff,

60 g/l einer Dispersion eines Perfluoralkylketten enthaltenden Acrylat-Copolymeren mit einem Fluorgehalt von ca. 40 Gew.-% im Feststoff und ca. 30 Gew.-% Feststoff, bezogen auf die Gesamtdispersion; das Copolymer enthält Polyethlenoxidmethacrylat mit reaktionsfähigen OH-Gruppen, wie es in EP-A-312 964 beschrieben ist,

6 g/l Zinknitrat als Katalysator für den Dimethylolethylenharnstoff.

| Bewertung | Beispiel 6 | Vergleich D |
|---|---|---|
| Ölabweisung | | |
| Original | 6 | 6 |
| nach 1x Wäsche | 6 | 4 |
| nach 5x Wäsche | 6 | 2 |
| Schmutzauswaschbarkeit (Note) | | |
| Original | 3 | 3 |
| nach 5x Wäsche | 4 | 5 |
| Wiederanschmutzung | | |
| nach 1x Wäsche | 58,7 | 31,6 |
| nach 5x Wäsche | 40,1 | 30,8 |

**Patentansprüche**

1. Mittel zur Erzielung wasch- und reinigungsbeständiger Textilausrüstungen und wäßrige Dispersionen daraus, gekennzeichnet dadurch, daß die Mittel aus reaktiven Copolymerisaten und/oder Cokondensaten mit Perfluoralkylgruppen und wasserdispergierbaren, nicht blockierten Polyisocyanatgemischen als Vernetzungsmittel bestehen.

2. Mittel nach Anspruch 1, dadurch gekennzeichnet, daß die Copolymerisate und/oder Cokondensate als reaktive Gruppen OH- bzw. O-$C_1$-$C_3$-Alkyl-Gruppen enthalten.

3. Mittel nach Anspruch 1, dadurch gekennzeichnet, daß die Polyisocyanatgemische

a) eine mittlere NCO-Funktionalität von 1,8 bis 4,2,

b) einen Gehalt an (cyclo)aliphatisch gebundenen Isocyanatgruppen (berechnet als NCO, Molekulargewicht = 42) von 12,0 bis 21,5 Gew.-% und

c) einen Gehalt an innerhalb von Polyetherketten angeordneten Ethylenoxideinheiten (berechnet als $C_2H_4O$, Molekulargewicht = 44) von 2 bis 20 Gew.-% haben, wobei die Polyetherketten im statistischen Mittel von 5 bis 70 Ethylenoxideinheiten aufweisen.

4.  Mittel nach Anspruch 1, dadurch gekennzeichnet, daß die Polyisocyanatgemische in Mengen von 3 bis 500 Gew.-%, bezogen auf 100 %iges reaktives, Perfluoralkylgruppen enthaltendes Copolymer und/oder Cokondensat eingesetzt werden.

5.  Verfahren zur Erzielung wasch- und reinigungsbeständiger Textilausrüstungen, dadurch gekennzeichnet, daß die Textilien mit einer wäßrigen Dispersion von Mitteln imprägniert werden, die aus reaktiven Copolymerisaten und/oder Cokondensaten mit Perfluoralkylgruppen und wasserdispergierbaren, nicht blockierten Polyisocyanatgemischen bestehen, und die Mittel auf den Textilien anschließend bei 20 bis 200 °C vernetzt werden.

6.  Verwendung der Mittel nach Anspruch 1 zur Ausrüstung von Textilien, bevorzugt Regenkleidung, Tischwäsche, Arbeitsschutzkleidung und technische Textilien.

## Claims

1.  Compositions for obtaining wash- and cleaning-resistant textile finishes and aqueous dispersions thereof, characterised in that the compositions consist of reactive copolymers and/or cocondensates having perfluoroalkyl groups and water-dispersible, non-blocked polyisocyanate mixtures as crosslinking agents.

2.  Compositions according to Claim 1, characterised in that the copolymers and/or cocondensates contain OH or O-$C_1$-$C_3$-alkyl groups as reactive groups.

3.  Compositions according to Claim 1, characterised in that the polyisocyanate mixtures contain

    a) an average NCO functionality of 1.8 to 4.2,

    b) a content of (cyclo)aliphatically bonded isocyanate groups (calculated as NCO, molecular weight = 42) of 12.0 to 21.5% by weight and

    c) a content of ethylene oxide units arranged in polyether chains (calculated as $C_2H_4O$, molecular weight = 44) of 2 to 20% by weight, the polyether chains on a statistical average containing from 5 to 70 ethylene oxide units.

4.  Compositions according to Claim 1, characterised in that the polyisocyanate mixtures are employed in amounts from 3 to 500% by weight, relative to 100% strength reactive copolymer and/or cocondensate containing perfluoroalkyl groups.

5.  Process for obtaining wash- and cleaning-resistant textile finishes, characterised in that the textiles are impregnated with an aqueous dispersion of compositions which consist of reactive copolymers and/or cocondensates having perfluoroalkyl groups and water-dispersible, non-blocked polyisocyanate mixtures, and the compositions are then crosslinked to the textiles at 20 to 200 °C.

6.  Use of the compositions according to Claim 1 for the finishing of textiles, preferably rainwear, table linen, protective working clothes and industrial textiles.

## Revendications

1.  Agents pour obtenir des apprêts de textiles résistant au lavage et au nettoyage, ainsi que des dispersions aqueuses de ces agents, caractérisés en ce que les agents sont constitués par des copolymères et/ou des cocondensats réactifs contenant des groupes perfluoralkyle et par des mélanges de polyisocyanates non bloqués, aptes à être dispersés dans l'eau, comme agents de réticulation.

2. Agents selon la revendication 1, caractérisés en ce que les copolymères et/ou les cocondensats contiennent, comme groupes réactifs, des groupes OH, respectivement des groupes O-alkyle en $C_1$-$C_3$.

3. Agents selon la revendication 1, caractérisés en ce que les mélanges de polyisocyanates possèdent
   a) une fonctionnalité NCO moyenne de 1,8 à 4,2,
   b) une teneur en groupes isocyanate (calculés comme NCO, poids moléculaire = 42) liés à des radicaux (cyclo)aliphatiques de 12,0 à 21,5% en poids, et
   c) une teneur en unités d'oxyde d'éthylène (calculé comme $C_2H_4O$, poids moléculaire = 44) arrangées à l'intérieur de chaînes polyéthers de 2 à 20% en poids, les chaînes polyéthers présentant, dans la moyenne statistique, de 5 à 70 unités d'oxyde d'éthylène.

4. Agents selon la revendication 1, caractérisés en ce que les mélanges de polyisocyanates sont mis en oeuvre dans des quantités de 3 à 500% en poids, rapportées aux copolymères et/ou aux cocondensats contenant des groupes perfluoralkyle, manifestant une réactivité de 100%.

5. Procédé pour obtenir des apprêts de textiles résistant au lavage et au nettoyage, caractérisé en ce qu'on imprègne les textiles avec une dispersion aqueuse d'agents qui sont constitués par des copolymères et/ou des cocondensats réactifs contenant des groupes perfluoralkyle et par des mélanges de polyisocyanates non bloqués, aptes à être dispersés dans l'eau, et on réticule ensuite les agents sur les textiles à une température de 20 à 200°C.

6. Utilisation des agents selon la revendication 1 pour l'apprêt de textiles, de préférence des vêtements imperméables, des nappages, des vêtements de protection et des textiles techniques.